# FASCICULE DE BREVET EUROPEEN

(11) **EP 0 633 481 B1**
(45) Date de publication et mention de la délivrance du brevet: **27.05.1998**
(21) Numéro de dépôt: 94401512.2
(22) Date de dépôt: 01.07.1994
(51) Int. Cl.: G01S 13/76

(54) **Procédé de placement dans le temps de transactions notamment entre un radar secondaire de mode S et des avions**
Verfahren zum zeitlichen Anordnen von Transaktionen zwischen einem im S-Modus arbeitenden Sekundar-Radarsystem und Flugzeugen
Method for positioning in time transactions between a mode S secondary radar and airplanes

(30) Priorité: 09.07.1993 FR 9308474
(43) Date de publication de la demande: 11.01.1995
(73) Titulaire: THOMSON-CSF, 75008 Paris (FR)
(72) Inventeur: Potier, Eric, Thomson-CSF, F-92402 Courbevoie Cedex (FR); Wybierala, Michel, Thomson-CSF, F-92402 Courbevoie Cedex (FR)
(74) Mandataire: Benoit, Monique

(56) Documents cités:
- FR-A- 2 680 581
- PROCEEDINGS OF THE IEEE, vol.77, no.11, Novembre 1989, NEW YORK US pages 1684 - 1694, XP101183 BAKER ET AL. 'Mode S System Design and Architecture'

## Description

La présente invention concerne un procédé de placement dans le temps de transactions. Elle s'applique notamment au placement dans le temps de transactions entre un radar secondaire de mode S et des avions. Plus généralement, elle s'applique à tous types de transactions entre un système d'émission-réception et des cibles détectées.

Une transaction entre un radar secondaire de mode S et un avion consiste en plusieurs impulsions électromagnétiques représentant une interrogation sélective émise par ce radar à destination de cet avion suivie d'une fenêtre de réception permettant au système de réception du radar de recevoir la réponse envoyée par l'avion suite à l'émission d'interrogation. L'écart de temps entre l'impulsion d'interrogation et la fenêtre de réception dépend notamment de la distance de l'avion au radar, le temps accaparé par une interrogation sélective va par exemple de 20 µs à 50 µs, alors que le temps accaparé par une réponse peut être de l'ordre de 85 µs à 136 µs. Dans une période d'interrogation sélective de donnée de quelques millisecondes par exemple, un radar secondaire de mode S doit généralement traiter plusieurs transactions, les avions étant préalablement détectés et leurs positions étant par exemple définies par prédiction. Ces avions étant détectés et leurs distances au radar connues, les transactions les concernant doivent être programmées, notamment dans la période donnée précitée. Cependant, l'antenne du radar étant utilisée en émission et en réception, les impulsions d'interrogation et les fenêtres ne peuvent se chevaucher. Les longueurs des transactions étant différentes et ces chevauchements ne pouvant avoir lieu, il en résulte que les transactions ne remplissent généralement pas de façon optimale les périodes de temps qui leurs sont allouées, car pour éviter des chevauchements et tenir compte des longueurs différentes des transactions, des espaces de temps plus au moins longs séparent les impulsions d'interrogations entre elles ou les fenêtres de réception entre elles.

Or, le trafic aérien devient de plus en plus dense avec des pointes de densité dans certaines zones telles que des aéroports par exemple. En conséquence le nombre de transactions à traiter par les radars secondaires de mode S devient de plus en plus important et ces derniers finissent par être saturés dans des secteurs azimutaux précis avec les algorithmes classiques. Une utilisation non optimale du temps par les transactions limite les possibilités des radars vis à vis de cette augmentation du trafic aérien. Une utilisation plus optimisée du temps permettrait en effet au radar de traiter plus de transactions, donc de correspondre avec plus d'avions et d'accroître la capacité des radars de Mode S.

Une méthode connue de programmation de transactions consiste dans un premier temps à classer les avions déclarés actifs suivant leur distance décroissante au radar, à les sélectionner selon des critères de priorité, puis à positionner les fenêtres d'écoutes de façon à ce que chaque fenêtre d'écoute soit placée après celle correspondant à l'avion qui a la distance immédiatement supérieure. Si cette disposition devient impossible, c'est à dire si l'impulsion d'interrogation associée à la dernière fenêtre placée chevauche une fenêtre précédente, alors toute la transaction, impulsion d'interrogation et fenêtre de réception, est placée après la dernière fenêtre précédente. Cette méthode de programmation laisse encore des espaces de temps importants inoccupés et ne permet donc pas de répondre à une augmentation de transactions traitées par radar.

Le but de l'invention est de palier les inconvénients précités, notamment en jouant à la fois sur les fenêtres de réception et sur les impulsions d'interrogation des transactions à placer.

A cet effet, l'invention a pour objet un procédé de placement dans le temps de transactions entre un système d'émission-réception et des cibles préalablement détectées, une transaction Iᵢ,Fᵢ étant constituée d'une ou plusieurs impulsions d'interrogation Iᵢ émise par le système suivie d'une ou plusieurs fenêtres de réception Fᵢ associée et destinée à recevoir la réponse de la cible à qui était envoyée l'impulsion d'interrogation associée Iᵢ, la longueur d'une transaction étant définie par le retard entre son impulsion Iᵢ et sa fenêtre Fᵢ, les transactions étant classées et mises en place suivant leurs longueurs décroissantes, caractérisé en ce que la fenêtre de réception Fᵢ de chaque transaction est placée immédiatement avant la fenêtre Fᵢ₋₁ de la transaction de rang immédiatement inférieur tant que son impulsion associée Iᵢ ne chevauche pas une impulsion d'interrogation Iᵢ₋₁ d'une transaction précédemment placée et en ce que dans le cas contraire, la transaction Iᵢ,Fᵢ est déplacée à l'intérieur des transactions précédemment placées, l'impulsion d'interrogation Iᵢ étant placée au plus tôt jusqu'à ce qu'il n'y ait plus de chevauchement entre son impulsion Iᵢ ou sa fenêtre Fᵢ et une impulsion d'interrogation ou une fenêtre de réception de ces transactions précédemment placées, la transaction Iᵢ,Fᵢ étant placée après toutes les fenêtres précédemment placées si une place sans chevauchement n'est pas trouvée ainsi.

L'invention a pour principaux avantages qu'elle permet de placer un maximum de transactions dans un temps donné qu'elle accroît de façon significative les performances d'une station radar Mode S, qu'elle est simple à mettre en oeuvre et qu'elle est économique.

D'autres caractéristiques et avantages de l'invention apparaîtront au cours de la description faite en regard des dessins annexés qui représentent :
- la figure 1, un procédé de placement selon l'art antérieur;
- la figure 2, un procédé de placement possible selon l'invention ;
- la figure 3, un chevauchement entre deux impulsions ;
- les figures 4 à 7, un premier mode possible de déplacement d'une transaction à l'intérieur de transactions précédemment placées et par rapport à une transaction précédemment placée ;
- la figure 8, le placement d'une transaction quand celle-ci ne peut être placée à l'intérieur des impulsions précédemment placées ;
- la figure 9, un deuxième mode possible de déplacement d'une transaction à l'intérieur de transactions précédemment placées ;
- la figure 10, un cas où des éléments de transactions placées s'étant déjà déroulés, une nouvelle transaction est à placer.

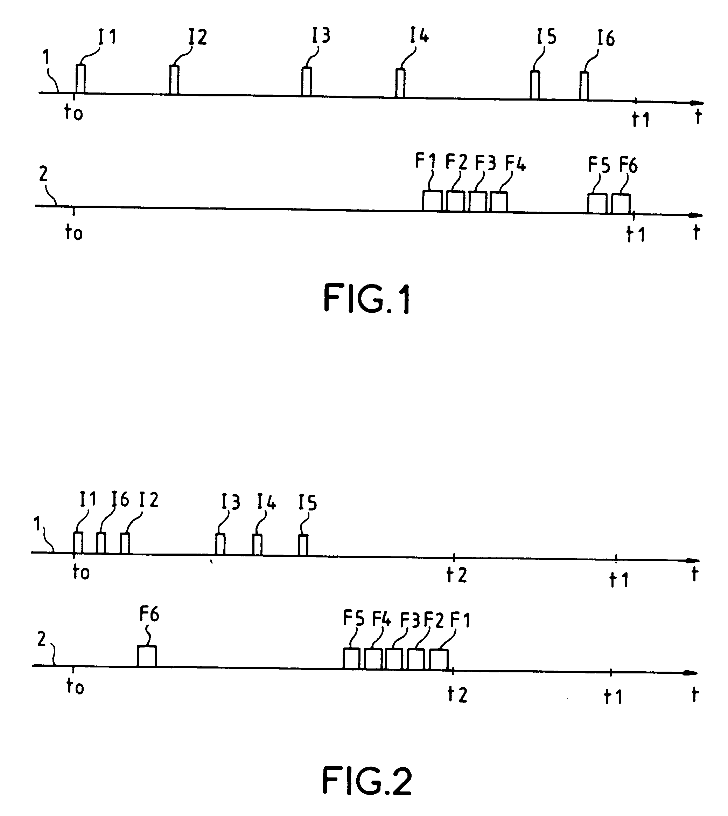

La figure 1, présente un procédé de programmation de transactions selon l'art antérieur concernant à titre d'exemple, le placement dans le temps de six transactions I₁, F₁, I₂, F₂, I₃, F₂, I₄, F₄, I₅, F₅, I₆, F₆. Ces six transactions sont par exemple destinées à six avions préalablement détectés par le radar secondaire de mode S et dont les positions dans l'espace ont par exemple été prédites.

Les impulsions d'interrogations I₁, I₂, I₃, I₄, I₅, I₆ sont par exemple placées le long d'un premier axe 1 et les fenêtres de réception sont placées le long d'un deuxième axe 2. Cependant ces deux axes représentent la même échelle des temps t et pourraient donc être superposés. Le rang de chaque transaction est fonction de la distance de son avion correspondant au système d'émission-réception, avec le radar secondaire de mode S précité par exemple, qui émet les impulsions d'interrogation et qui reçoit les réponses des cibles détectées, des avions par exemple. La distance des cibles au système est par exemple prédite selon des méthodes connues de l'homme du métier. La transaction de rang le plus inférieur, I₁ F₁ est celle correspondant à l'avion le plus éloigné du radar. Une transaction de rang inférieur à une transaction donnée correspond à un avion plus éloigné du radar que celui concerné par la transaction donnée. La longueur d'une transaction I₁, F₁ qui représente le retard entre son impulsion d'interrogation I₁ et sa fenêtre de réception F₁ est fonction de la distance de la cible correspondante au système. Le classement précité revient donc à ce que les transactions soient classées suivant les distances au radar décroissantes. Il s'agit d'un classement pour l'ordre de traitement des transactions, c'est à dire pour l'ordre de leur mise en place, et non pas nécessairement un classement selon les axes de temps 1, 2. Dans le cas du procédé de la figure 1, la première transaction I₁,F₁ est calée à un instant donnée initial to, instant où est programmée son impulsion I₁, sa fenêtre est placée en conséquence. En effet, le retard entre une impulsion d'interrogation I₁ et sa fenêtre F₁ associée définit la longueur de la transaction fonction de la distance de sa cible correspondante au système d'émission-réception, en conséquence le déplacement de l'impulsion ou de la fenêtre impose le placement de l'autre élément de la transaction. Chaque fenêtre d'écoute est placée immédiatement après la fenêtre de rang immédiatement inférieur, avec un intervalle de séparation de quelques micro-secondes par exemple, jusqu'à ce que son impulsion associée chevauche une fenêtre précédemment placée, c'est-à-dire de rang inférieur.

Dans l'exemple de la figure 1, les quatre premières transactions I₁, F₁, I₂, F₂, I₃, F₂, I₄, F₄ sont ainsi placées de manière que chaque fenêtre soit immédiatement placée après la fenêtre de rang immédiatement inférieur. La cinquième fenêtre F₅ ne suit pas immédiatement la quatrième fenêtre F₄ car sinon son impulsion associée I₅ chevaucherait les fenêtres précédentes. Dans ce cas, selon le procédé illustré par la figure 1, la cinquième transaction I₅, F₅ est placée après toutes les fenêtres précédentes, c'est à dire après la quatrième fenêtre F₄. La cinquième impulsion I₅ est alors placée après la quatrième fenêtre F₄. Pour la suite, la sixième fenêtre est placée immédiatement après la cinquième fenêtre F₅ . Cela est possible dans l'exemple de la figure 1 car la longueur de la sixième transaction I₆ , F₆ est telle que la sixième impulsion ne chevauche pas la cinquième fenêtre F₅. Le procédé de la figure 1 permet de placer les six transactions présentées en un temps t1-to, le temps t1 correspondant à la fin de la sixième et dernière fenêtre placée F₆.

La figure 2 illustre un placement des mêmes six transactions précédentes I₁,F₁,I₂,F₂,I₃,F₂,I₄,F₄,I₅,F₅,I₆,F₆ par un procédé de placement possible selon l'invention.

Les transactions sont toujours traitées suivant leurs rangs, la première transaction, ayant la plus grande longueur, étant mise en place avant la deuxième transaction et ainsi de suite.

Selon l'invention, une fenêtre est placée immédiatement avant la fenêtre de rang immédiatement inférieur avec un intervalle de séparation de quelques microsecondes par exemple, le placement des impulsions associées étant alors imposé par la longueur des transactions. Ce placement est effectué de cette façon jusqu'à ce qu'apparaîsse un chevauchement entre la fenêtre ou l'impulsion d'interrogation en cours de placement et une impulsion précédemment placée.

Le terme "immédiatement" signifie notamment qu'aucun élément d'une autre transaction de rang inférieur, une impulsion d'interrogation ou une fenêtre de réception, n'est intercalé entre les éléments auquel il s'applique. Par ailleurs, le rang d'une impulsion ou d'une fenêtre correspond au rang de la transaction dans laquelle elle se situe.

Dans le cas illustré par la figure 2, les cinq premières transactions peuvent ainsi être placées, chaque fenêtre étant placée immédiatement avant la fenêtre de rang immédiatement inférieur.

Cependant, la sixième fenêtre F₆ ne peut être placée de la sorte car sinon son impulsion associée I₆ chevaucherait la cinquième impulsion I₅. Selon l'invention, quand une fenêtre F₆ ne peut se placer ainsi, la transaction I₆, F₆ est déplacée au plus tôt à l'intérieur des transactions précédentes, c'est à dire de rangs inférieurs, I₁,F₁,I₂,F₂,I₃,F₂,I₄,F₄,I₅,F₅ jusqu'à ce qu'elle puisse être placée sans chevauchement. Si aucun placement n'est possible sans chevauchement, alors la transaction I₆, F₆ est placée après toutes les fenêtres précédemment placées, c'est à dire après la fenêtre F₁ dans le cas de la figure 2. Les longueurs des transactions données à titre d'exemple sont cependant telles que la sixième transaction I₆, F₆ puisse être placée à l'intérieur des transactions précédentes, par exemple de façon à ce que la sixième fenêtre F₆ soit immédiatement placée après la deuxième impulsion I₂. Les six transactions, qui sont les mêmes que celles de l'exemple de placement de la figure 1, sont donc placées entre l'instant initial to et un instant t2, ce dernier correspondant à la fin de la première fenêtre F₁.

L'instant t2 est inférieur à l'instant t1 précédent de fin de placement de l'exemple de la figure 1. Les six transactions ont donc été placées dans un temps t2-to inférieur et occupent donc de façon plus optimale l'espace de temps disponible pour les transactions, ce qui revient au fait que pour un temps donné, plus de transactions peuvent être traitées.

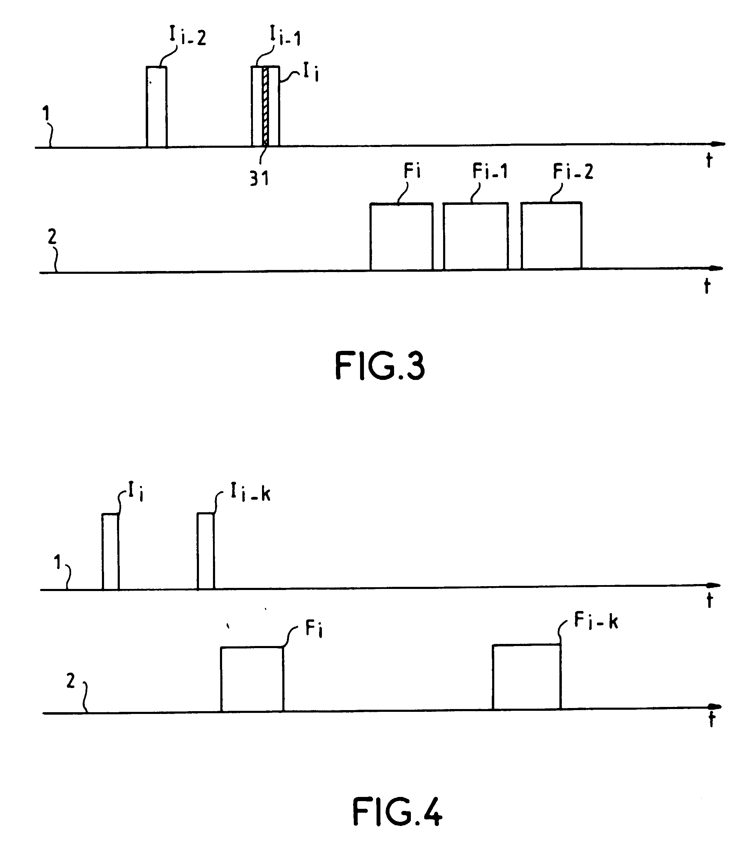

Les figures 3 à 7 illustrent un mode de placement possible d'une transaction à l'intérieur des transactions précédentes quand sa fenêtre ne peut plus être placée immédiatement avant la fenêtre de rang immédiatement inférieur pour cause de chevauchement, comme dans le cas par exemple du placement de la sixième fenêtre F₆ illustrée par la figure 2. La figure 3 présente le placement de trois transactions prises parmi d'autres et de rangs successifs Iᵢ₋₂, Fᵢ₋₂, Iᵢ₋₁, Fᵢ₋₁, Iᵢ, Fᵢ, la i₋₂ème transaction Iᵢ₋₂, Fᵢ₋₂ ayant une longueur supérieure à la i-1^{ème} transaction Iᵢ₋₁, Fᵢ₋₁ qui a elle-même une longueur supérieure à la i-ème transaction Iᵢ,Fᵢ. La i-2^{ème} transaction Iᵢ₋₂, Fᵢ₋₂ est mise en place avant la i-1^{ème} transaction Iᵢ₋₁, Fᵢ₋₁ qui est elle-même mise en place avant la i^{ème} transaction Iᵢ, Fᵢ. Les ᵢ₋₂ème et ᵢ₋₁ème transactions étant placées, la figure 3 illustre le placement de la ᵢème transaction Iᵢ, Fᵢ.

Cette figure montre le cas où le placement d'une fenêtre Fᵢ immédiatement avant la fenêtre de rang immédiatement inférieur Fᵢ₋₁ n'est plus possible à cause d'un chevauchement 31 de son impulsion associée Iᵢ avec une impulsion précédente Iᵢ₋₁. Dans l'exemple de la figure 3, le chevauchement 31 se fait avec la i-1^{ème} impulsion Iᵢ₋₁ associée à la ᵢ₋₁ème fenêtre de rang immédiatement inférieur Fᵢ₋₁.

Suite à ce chevauchement 31, le placement de la ᵢème transaction Fᵢ, Fᵢ à l'intérieur des transactions précédentes se fait par exemple en plaçant successivement la ᵢème transaction Iᵢ,Fᵢ aux limites des transactions précédemment placées, en partant de l'interrogation de la transaction la plus anciennement placée, c'est à dire celle de rang le plus inférieur. Ces placements successifs sont effectués jusqu'à ce qu'il n'y ait plus de chevauchement entre les éléments de la ᵢème transaction, c'est à dire son impulsion d'interrogation Iᵢ et sa fenêtre de réception Fᵢ, et des éléments des transactions précédemment placées, c'est à dire des impulsions ou des fenêtres précédemment placées. Dès qu'une place sans chevauchement est trouvée, la transaction Iᵢ,Fᵢ est définitivement placée.

Les figures 4 à 7 illustrent des exemples de placements successifs aux limites d'une transaction de rang i-k inférieur au rang i de la ᵢéme transaction Iᵢ,Fᵢ, les placements aux limites des transactions de rangs inférieurs à i-k ayant été infructueux à cause de chevauchements. Pour des raisons de clarté, seules la ᵢème transaction Iᵢ,Fᵢ et la i-kème transaction Iᵢ₋ₖ,Fᵢ₋ₖ ont été représentées, des éventuels chevauchements avec des éléments des transactions précédemment placées pouvant avoir lieu.

Un premier placement aux limites possible est présenté par la figure 4. La ᵢème fenêtre Fᵢ est placée immédiatement après la i-k^{ème} impulsion d'interrogation Iᵢ₋ₖ, le placement de son impulsion d'interrogation associée Iᵢ étant imposée par la longueur de la transaction Iᵢ,Fᵢ . La i-k^{éme} transaction Iᵢ₋ₖ,Fᵢ₋ₖ étant de rang inférieur à la ᵢème transaction Iᵢ,Fᵢ, la longueur de la i-k^{ème} transaction est donc supérieure à la longueur de la ᵢème transaction.

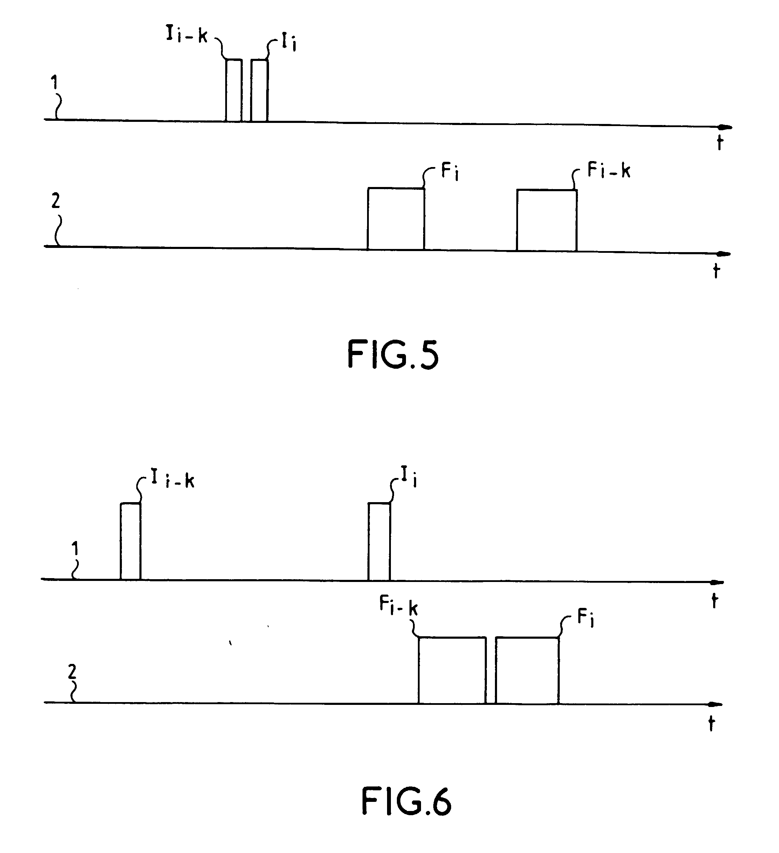

Un deuxième placement aux limites possible est présenté par la figure 5. La ᵢème impulsion d'interrogation Iᵢ est placée immédiatement après la i-kème impulsion d'interrogation Iᵢ₋ₖ, le placement de sa fenêtre associée, la ᵢème fenêtre Fᵢ, étant imposée par la longueur de la transaction Iᵢ,Fᵢ.

La figure 6 illustre un troisième placement aux limites possible. La ᵢéme fenêtre Fᵢ est placée immédiatement après la i-k^{ème} fenêtre Fᵢ₋ₖ, le placement de la ᵢème impulsion étant imposé par la longueur de la ᵢème transaction Iᵢ, Fᵢ.

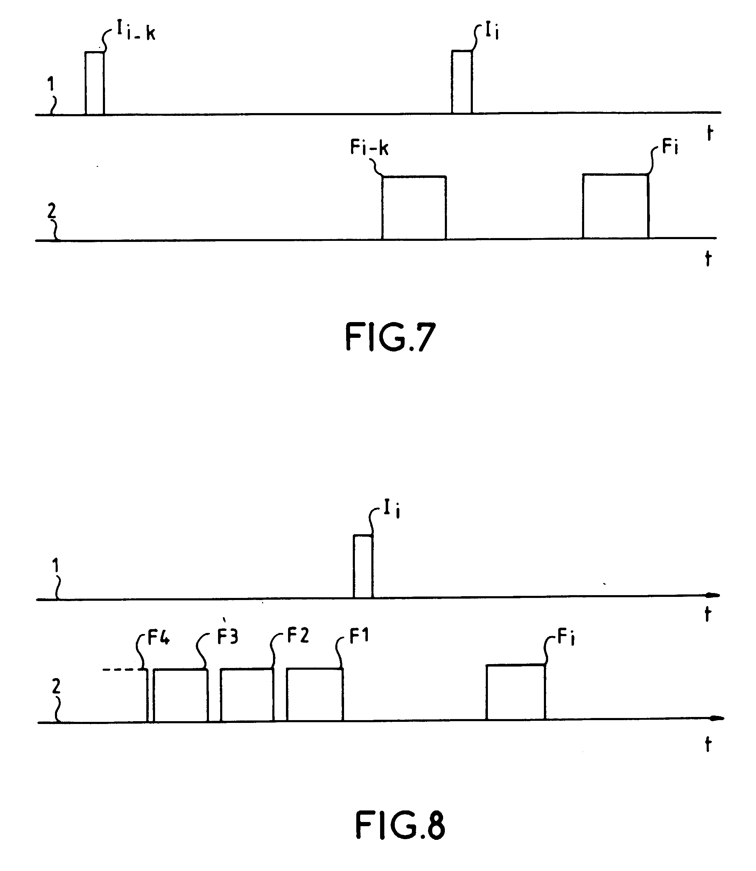

La figure 7 illustre un quatrième placement aux limites possible. La ᵢème impulsion d'interrogation Iᵢ est placée immédiatement après la ᵢ₋ₖème fenêtre, le placement de la ᵢème fenêtre Fᵢ étant imposé par la longueur de la ᵢème transaction.

Si aucun placement aux limites des transactions placées précédemment ne peut se faire sans chevauchement, et ceci pour tous les cas entre la transaction i et la transaction i-k, où k appartient à l'espace [1,(i-1)], alors la transaction est placée après les fenêtres précédemment placées comme le montre la figure 8. La ᵢème transaction Iᵢ, Fᵢ n'ayant pu être placée à l'intérieur des transactions précédentes suites aux placements aux limites de ces transactions, la ᵢème impulsion d'interrogation Iᵢ est placée après les fenêtres précédemment placées F₁,F₂,F₃,F₄. Le processus de séquencement peut alors se renouveler à l'identique, la transaction Iᵢ₊₁, Fᵢ₊₁ étant traitée par rapport à Iᵢ, Fᵢ, comme avait été placée I₂, F₂ par rapport à I₁, F₁, et ainsi de suite jusqu'à épuisement des transactions.

Les placements aux limites peuvent être réalisés selon un ou plusieurs des exemples précités illustrés par les figures 4 à 7. Un test de placement aux limites peut par exemple suivre les étapes suivantes, de la plus prioritaire à la moins prioritaire, ceci pour toutes les transactions placées en commençant par celle de rang le plus faible (I₁, F₁) et jusqu'à ce qu'une absence de chevauchement soit éventuellement constatée :
- dans une première étape, la fenêtre de réception de la transaction en cours de placement est placée immédiatement après l'impulsion d'interrogation d'une transaction précédemment placée comme l'illustre la figure 4 ;
- dans une deuxième étape, l'impulsion d'interrogation de la transaction en cours de placement est placée après l'impulsion d'interrogation de la transaction précédemment placée comme l'illustre la figure 5 ;
- dans une troisième étape, la fenêtre de réception de la transaction en cours de placement est placée après la fenêtre de réception de la transaction précédemment placée comme l'illustre la figure 6 ;
- dans une quatrième étape, l'impulsion d'interrogation de la transaction en cours de placement est placée après la fenêtre de réception de la transaction précédente comme l'illustre la figure 7 ; ces étapes étant successivement réalisées à partir de la transaction la plus anciennement placée, c'est à dire celle de rang le plus inférieur.

Dans l'exemple de placement de la figure 2, la sixième transaction I₆,F₆. a été placée de façon à ce que la sixième fenêtre F₆ soit immédiatement placée après la deuxième impulsion I₂, la sixième impulsion I₆ ne chevauchant plus alors aucun élément des transactions précédemment placées I₁,F₁,I₂,F₂,I₃,F₂,I₄,F₄,I₅,F₅. En effet, I₆ placé juste après ou avant I₁ ne convient pas ici car F₆ chevauche I₂ et F₆ ne peut être placé avant ou après I₁ car alors I₆ est placé avant to, instant de début de la période d'interrogation sélective. F₆ avant I₂ ne convient pas non plus car I₆ chevauche I₁.

Dans les exemples de placements aux limites présentés par les figures 4 à 7, les éléments de la transaction en cours de placement, son impulsion d'interrogation Iᵢ ou sa fenêtre de réception Fᵢ, sont placés après les éléments de la transaction précédemment placée Iᵢ₋ₖ,Fᵢ₋ₖ.

D'autres placements sont possibles, en plaçant notamment les éléments de la transaction en cours Iᵢ, Fᵢ avant les éléments de la transaction précédemment placée Iᵢ₋ₖ,Fᵢ₋ₖ . Ainsi, quatre autres placements aux limites possibles peuvent être les suivants :
- la ᵢéme fenêtre Fᵢ est placée immédiatement avant la i-k^{ème} impulsion d'interrogation Iᵢ₋ₖ ;
- la ᵢéme impulsion d'interrogation Iᵢ est placée immédiatement avant la i-k^{ème} impulsion Iᵢ₋ₖ ;
- la ᵢéme fenêtre Fᵢ est placée immédiatement avant la i-k^{ème} fenêtre Fᵢ₋ₖ ;
- la ᵢème impulsion Iᵢ est placée immédiatement avant i-k^{ème} fenêtre Fᵢ₋ₖ.

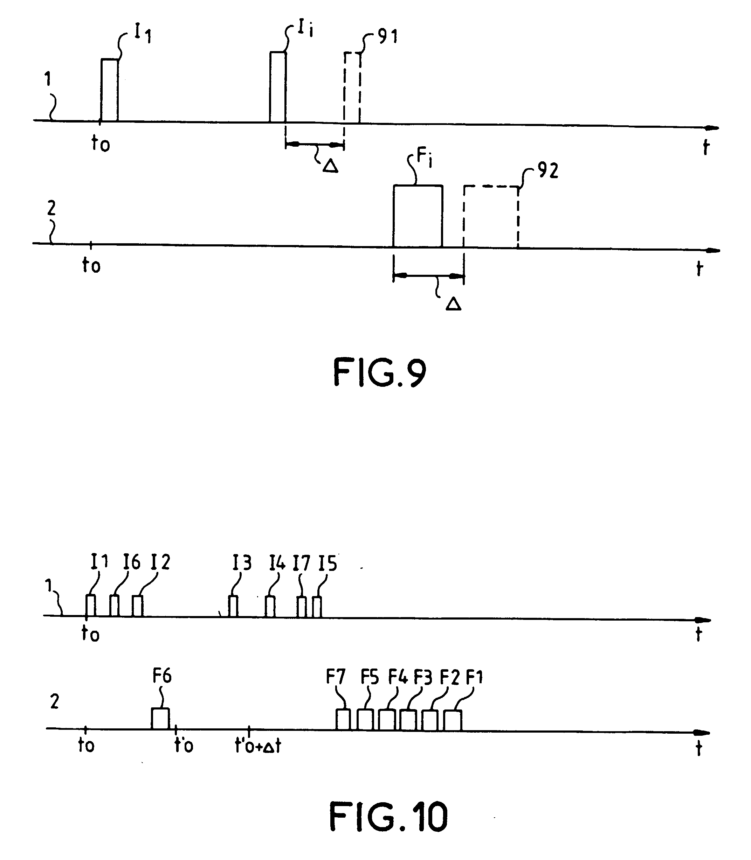

La figure 9 présente un autre mode possible de déplacement d'une transaction, en cours de placement, à l'intérieur des transactions précédemment placées. La transaction Iᵢ,Fᵢ en cours de placement se déplace, à l'intérieur des transactions précédentes, par exemple suivant un pas Δ à partir de l'impulsion I₁ de la transaction la plus anciennement placée, c'est à dire de rang le plus inférieur.

Une nouvelle position 91 est successivement définie par le pas Δ à partir de la position précédente de l'impulsion d'interrogation Iᵢ, de même une position nouvelle 92 est successivement définie par le pas Δ à partir de la position précédente de la fenêtre de réception Fᵢ.

Le pas Δ est prédéterminé. Il peut être programmable par exemple.

La figure 10 illustre un cas de nouvelle définition de l'instant au plus tôt où à un instant t'o, le placement de transactions I₁,F₁,I₂,F₂,I₃,F₂,I₄,F₄,I₅,F₅,I₆,F₆.ayant été programmé et où depuis un instant to, antérieur à t'o, des éléments I₁,I₆,I₂,F₆ de ces transactions s'étant effectivement déroulés, il est décidé de rajouter une transaction supplémentaire I₇, F₇. Les transactions déjà placées sont par exemples placées conformément à l'exemple de la figure 2. Le temps de programmation du placement de la transaction supplémentaire I₇, F₇ impose notamment que cette transaction ne pourra effectivement avoir lieu avant un instant t'o+Δ postérieur à l'instant t'o où il a été décidé de l'introduire. La programmation du placement de cette transaction supplémentaire I₇, F₇ se fait donc avec le procédé selon l'invention mais en faisant partir l'instant initial de placement possible de la transaction I₇, F₇.à l'instant t'o+Δ postérieur.

## Revendications

1. Procédé de placement dans le temps de transactions entre un système d'émission-réception et des cibles préalablement détectées, une transaction (Iᵢ,Fᵢ) étant constituée d'une ou plusieurs impulsions d'interrogation (Iᵢ) émise par le système suivies d'une ou plusieurs fenêtres de réception (Fᵢ) associées et destinées à recevoir la réponse de la cible à qui était envoyée l'impulsion d'interrogation associée (Iᵢ), la longueur d'une transaction étant définie par le retard entre son impulsion (Iᵢ) et sa fenêtre (Fᵢ), les transactions étant classées et mises en place suivant leurs longueurs décroissantes, caractérisé en ce que la fenêtre de réception (Fᵢ) de chaque transaction est placée immédiatement avant la fenêtre (Fᵢ₋₁) de la transaction de rang immédiatement inférieur tant que son impulsion associée (Iᵢ) ne chevauche pas une impulsion d'interrogation (Iᵢ₋₁) d'une transaction précédemment placée et en ce que dans le cas contraire, la transaction (Iᵢ,Fᵢ) est déplacée à l'intérieur des transactions précédemment placées, l'impulsion d'interrogation (Iᵢ) étant placée au plus tôt, jusqu'à ce qu'il n'y ait plus de chevauchement (31) entre son impulsion (Iᵢ) ou sa fenêtre (Fᵢ) et une impulsion d'interrogation ou une fenêtre de réception de ces transactions précédemment placées, la transaction (Iᵢ,Fᵢ) étant placée après toutes les fenêtres précédemment placées (F₁,F₂,F₃,F₄,F₅) si une place sans chevauchement n'est pas trouvée.

2. Procédé selon la revendication 1, caractérisé en ce que la transaction (Iᵢ, Fᵢ) est déplacée à l'intérieur des transactions précédemment placées de façon à ce qu'elle soit successivement placée aux limites de ces transactions précédemment placées, en partant de la transaction la plus anciennement placée (I₁).

3. Procédé selon la revendication 2, caractérisé en ce que le placement aux limites comprend au moins l'une des quatre étapes suivantes :
- dans une première étape, la fenêtre de réception (Fᵢ) de la transaction est placée immédiatement après l'impulsion d'interrogation (Iᵢ₋₁) d'une transaction précédemment placée (Iᵢ₋₁,Fᵢ₋₁) ;
- dans une deuxième étape, l'impulsion d'interrogation (Iᵢ) de la transaction est placée immédiatement après l'impulsion d'interrogation (Iᵢ₋₁) de la transaction précédemment placée ;
- dans une troisième étape, la fenêtre de réception (Fᵢ) de la transaction est placée immédiatement après la fenêtre de réception (Fᵢ₋₁) de la transaction précédemment placée ;
- dans une quatrième étape, l'impulsion d'interrogation (Iᵢ) de la transaction est placée immédiatement après la fenêtre de réception (Fᵢ₋₁) de la transaction précédemment placée.

4. Procédé selon la revendication 2, caractérisé en ce que le placement aux limites comprend au moins l'une des quatre étapes suivantes :
- dans une première étape, la fenêtre de réception (Fᵢ) de la transaction est placée immédiatement avant l'impulsion d'interrogation (Iᵢ₋₁) d'une transaction précédemment placée (Iᵢ₋₁,Fᵢ₋₁) ;
- dans une deuxième étape, l'impulsion d'interrogation (Iᵢ) de la transaction est placée immédiatement avant l'impulsion d'interrogation (Iᵢ₋₁) de la transaction précédemment placée ;
- dans une troisième étape, la fenêtre de réception (Fᵢ) de la transaction est placée immédiatement avant la fenêtre de réception (Fᵢ₋₁) de la transaction précédemment placée ;
- dans une quatrième étape, l'impulsion d'interrogation (Iᵢ) de la transaction est placée immédiatement avant la fenêtre de réception (Fᵢ₋₁) de la transaction précédemment placée.

5. Procédé selon la revendication 1, caractérisé en ce que la transaction (Iᵢ,Fᵢ) est déplacée à l'intérieur des transactions précédemment placées suivant un pas (Δ) depuis l'impulsion (I₁) de la transaction la plus anciennement placée.

6. Procédé selon l'une quelconque des revendications précédentes, caractérisé en ce que plusieurs impulsions d'interrogation (I₁, I₂,I₆) ou fenêtres de réception (F₆) s'étant déjà déroulées, une nouvelle transaction (I₇, F₇) est placée par placement aux limites des transactions déjà placées et non encore déroulées jusqu'à ce qu'il n'y ait plus de chevauchement (31) entre la nouvelle transaction (I₇, F₇) et les transactions précédemment placées.

7. Procédé selon l'une quelconque des revendications 1 à 5, caractérisé en ce que plusieurs impulsions d'interrogation (I₁, I₂, I₆) ou fenêtres de réception (F₆) s'étant déjà déroulées, une nouvelle transaction (I₇, F₇) est placée par déplacement à partir d'un instant au plus tôt (t'o+Δ) à l'intérieur des transactions déjà placées et non encore déroulées suivant un pas (Δ) jusqu'à ce qu'il n'y ait plus de chevauchement (31) entre la nouvelle transaction (I₇, F₇) et les transactions précédemment placées.

## Claims

1. Method for the placing, in time, of transactions between a transmission/reception system and targets detected beforehand, a transaction (Iᵢ, Fᵢ) being constituted by one or more interrogation pulses (Iᵢ) sent out by the system followed by one or more associated reception windows (Fᵢ) designed to receive the response from the target that has been sent the associated interrogation pulse (Iᵢ), the length of a transaction being defined by the delay between its pulse (Iᵢ) and its window (Fᵢ), the transactions being ranked and positioned according to their decreasing lengths, characterized in that the reception window (Fᵢ) of each transaction is placed immediately before the window (Fᵢ₋₁) of the immediately lower-ranking transaction so long as its associated pulse (Iᵢ) does not overlap an interrogation pulse (Iᵢ₋₁) of a previously-placed transaction and in that if the contrary is the case, the transaction (Iᵢ, Fᵢ) is shifted within the previously-placed transactions, the interrogation pulse (Iᵢ) being placed at the earliest point in time until there is no longer any overlapping (31) between its pulse (Iᵢ) or its window (Fᵢ) and an interrogation pulse or a reception window of these previously-placed transactions, the transaction (Iᵢ, Fᵢ) being placed after all the previously-placed windows (F₁, F₂, F₃, F₄, F₅) if a place without overlapping is not found.

2. Method according to Claim 1, characterized in that the transaction (Iᵢ, Fᵢ) is shifted within previously-placed transactions so that it is successively placed at the limits of these previously-placed transactions, starting from the earliest-placed transaction (I₁).

3. Method according to Claim 2, characterized in that the placing at the limits includes at least one of the following four steps:
- in a first step, the reception window (Fᵢ) of the transaction is placed immediately after the interrogation pulse (Iᵢ₋₁) of a previously-placed transaction (Iᵢ₋₁, Fᵢ₋₁);
- in a second step, the interrogation pulse (Iᵢ) of the transaction is placed immediately after the interrogation pulse (Iᵢ₋₁) of the previously-placed transaction;
- in a third step, the reception window (Fᵢ) of the transaction is placed immediately after the reception window (Fᵢ₋₁) of the previously-placed transaction;
- in a fourth step, the interrogation pulse (Iᵢ) of the transaction is placed immediately after the reception window (Fᵢ₋₁) of the previously-placed transaction.

4. Method according to Claim 2, characterized in that the placing at the limits includes at least one of the following four steps:
- in a first step, the reception window (Fᵢ) of the transaction is placed immediately before the interrogation pulse (Iᵢ₋₁) of a previously-placed transaction (Iᵢ₋₁, Fᵢ₋₁);
- in a second step, the interrogation pulse (Iᵢ) of the transaction is placed immediately before the interrogation pulse (Iᵢ₋₁) of the previously-placed transaction;
- in a third step, the reception window (Fᵢ) of the transaction is placed immediately before the reception window (Fᵢ₋₁) of the previously-placed transaction;
- in a fourth step, the interrogation pulse (Iᵢ) of the transaction is placed immediately before the reception window (Fᵢ₋₁) of the previously-placed transaction.

5. Method according to Claim 1, characterized in that the transaction (Iᵢ, Fᵢ) is shifted within previously-placed transactions according to a pitch (Δ) starting from the pulse (I₁) of the earliest-placed transaction.

6. Method according to any one of the previous claims characterized in that, with several interrogation pulses (I₁, I₂, I₆) or reception windows (F₆) already having transpired, a new transaction (I₇, F₇) is placed by placing at the limits of already-placed transactions which have not yet transpired until there is no longer any overlapping (31) between the new transaction (I₇, F₇) and the previously-placed transactions.

7. Method according to any one of Claims 1 to 5 characterized in that, with several interrogation pulses (I₁, I₂, I₆) or reception windows (F₆) already having transpired, a new transaction (I₇, F₇) is placed by shifting from an instant at the earliest point in time (t'o+Δ ), within transactions that have already been placed and have not yet transpired, according to a pitch (Δ) until there is no longer any overlapping (31) between the new transaction (I₇, F₇) and the previously-placed transactions.

## Patentansprüche

1. Verfahren zur zeitlichen Positionierung von Dialog-Transaktionen zwischen einem Sende/Empfangssystem und vorher erfaßten Zielen, wobei eine Transaktion (Iᵢ, Fᵢ) von einem oder mehreren von dem System ausgesendeten Frageimpulsen (Iᵢ) und einem oder mehreren zugeordneten Empfangsfenstern (Fᵢ) gebildet wird, in denen die Antwort des Ziels empfangen werden soll, an das der zugeordnete Frageimpuls (Iᵢ) gesendet wurde, wobei die Länge einer Transaktion durch die Verzögerung zwischen dem Frageimpuls (Iᵢ) und seinem Empfangsfenster (Fᵢ) definiert ist und die Transaktionen gemäß abnehmender Transaktionslänge klassifiziert und positioniert werden, dadurch gekennzeichnet, daß das Empfangsfenster (Fᵢ) jeder Transaktion unmittelbar vor dem Empfangsfenster (Fᵢ₋₁) der Transaktion des nächstniedrigeren Rangs positioniert wird, so lange ihr zugeordneter Frageimpuls (Iᵢ) sich nicht mit einem Frageimpuls (Iᵢ₋₁) einer vorher positionierten Transaktion überlappt, daß im gegenteiligen Fall die Transaktion (Iᵢ, Fᵢ) innerhalb der vorher positionierten Transaktionen verschoben wird, wobei der Frageimpuls (Iᵢ) möglichst früh positioniert wird, sobald sich keine Überlappung (31) mehr zwischen seinem Impuls (Iᵢ) oder seinem Fenster (Fᵢ) und einem Frageimpuls oder einem Empfangsfenster dieser vorher positionierten Transaktionen mehr ergibt, und daß die Transaktion (Iᵢ, Fᵢ) hinter allen vorher positionierten Fenstern (F₁, F₂, F₃, F₄, F₅) positioniert wird, wenn kein Platz ohne Überlappung gefunden wird.

2. Verfahren nach Anspruch 1, dadurch gekennzeichnet, daß die Transaktion (Iᵢ, Fᵢ) innerhalb der vorher positionierten Transaktionen so verschoben wird, daß sie nacheinander an den Grenzen dieser so positionierten Transaktionen liegt, ausgehend von der Transaktion (I₁, F₁) mit dem niedrigsten Rang.

3. Verfahren nach Anspruch 2, dadurch gekennzeichnet, daß die Positionierung an den Grenzen mindestens einen der vier folgenden Schritte enthält:
- In einem ersten Schritt wird das Empfangsfenster (Fᵢ) der Transaktion unmittelbar hinter dem Frageimpuls (Iᵢ₋₁) einer vorher positionierten Transaktion (Iᵢ₋₁, Fᵢ₋₁) positioniert;
in einem zweiten Schritt wird der Frageimpuls (Iᵢ) der Transaktion unmittelbar hinter dem Frageimpuls (Iᵢ₋₁) der vorher positionierten Transaktion (Iᵢ₋₁, Fᵢ₋₁) positioniert;
in einem dritten Schritt wird das Empfangsfenster (Fᵢ) der Transaktion unmittelbar hinter dem Empfangsfenster (Fᵢ₋₁) der vorher positionierten Transaktion positioniert;
in einem vierten Schritt wird der Frageimpuls (Iᵢ) der Transaktion unmittelbar hinter dem Empfangsfenster (Fᵢ₋₁) der vorher positionierten Transaktion positioniert.

4. Verfahren nach Anspruch 2, dadurch gekennzeichnet, daß die Positionierung an den Grenzen mindestens einen der vier folgenden Schritte enthält:
- In einem ersten Schritt wird das Empfangsfenster (Fᵢ) der Transaktion unmittelbar vor dem Frageimpuls (Iᵢ₋₁) einer vorher positionierten Transaktion (Iᵢ₋₁, Fᵢ₋₁) positioniert;
in einem zweiten Schritt wird der Frageimpuls (Iᵢ) der Transaktion unmittelbar vor dem Frageimpuls (Iᵢ₋₁) der vorher positionierten Transaktion positioniert;
in einem dritten Schritt wird das Empfangsfenster (Fᵢ) der Transaktion unmittelbar vor dem Empfangsfenster (Fᵢ₋₁) der vorher positionierten Transaktion positioniert;
in einem vierten Schritt wird der Frageimpuls (Iᵢ) der Transaktion unmittelbar vor dem Empfangsfenster (Fᵢ₋₁) der vorher positionierten Transaktion positioniert.

5. Verfahren nach Anspruch 1, dadurch gekennzeichnet, daß die Transaktion (Iᵢ, Fᵢ) innerhalb der vorher positionierten Transaktionen um einen Schritt (Δ) gegenüber dem Impuls (I₁) der Transaktion mit dem niedrigsten Rang verschoben wird.

6. Verfahren nach einem beliebigen der vorstehenden Ansprüche, dadurch gekennzeichnet, daß, wenn bereits mehrere Frageimpulse (I₁, I₂, I₆) oder Empfangsfenster (F₆) abgewickelt wurden, eine neue Transaktion (I₇, F₇) durch Positionierung an den Grenzen der bereits positionierten und noch nicht abgewickelten Transaktionen positioniert wird, bis sich keine Überlappung (31) mehr zwischen der neuen Transaktion (I₇, F₇) und den vorher positionierten Transaktionen ergibt.

7. Verfahren nach einem beliebigen der vorstehenden Ansprüche, dadurch gekennzeichnet, daß, wenn bereits mehrere Frageimpulse (I₁, I₂, I₆) oder Empfangsfenster (F₆) abgewickelt wurden, eine neue Transaktion (I₇, F₇) durch Verschiebung ausgehend von einem frühestmöglichen Zeitpunkt (t'o + Δ ) innerhalb der bereits positionierten und noch nicht abgewickelten Transaktionen um einen Schritt (Δ) positioniert wird, bis sich keine Überlappung (31) mehr zwischen der neuen Transaktion (I₇, F₇) und den vorher positionierten Transaktionen ergibt.
